# EUROPEAN PATENT APPLICATION

(11) **EP 4 571 783 A1**
(43) Date of publication of application: **18.06.2025**
(21) Application number: 23842033.5
(22) Date of filing: 28.06.2023
(51) Int. Cl.: G21D 3/00

(54) **MULTIPLEXING METHOD AND SYSTEM FOR NUCLEAR POWER PLANT CONTROL SYSTEM**

(30) Priority: 22.07.2022 CN 202210866149
(71) Applicant: China Nuclear Power Design Company Ltd. (Shenzhen), Shenzhen, Guangdong 518100 (CN); CGN Huizhou Nuclear Power Co., Ltd., Huizhou, Guangdong 516353 (CN); China General Nuclear Power Corporation, Shenzhen, Guangdong 518026 (CN); CGN Power Co., Ltd., Shenzhen, Guangdong 518026 (CN)
(72) Inventor: ZOU, Jie, Shenzhen, Guangdong 518100 (CN); CHENG, Bo, Shenzhen, Guangdong 518100 (CN); PENG, Huaqing, Shenzhen, Guangdong 518100 (CN); ZHANG, Liming, Shenzhen, Guangdong 518100 (CN); HUANG, Weijun, Shenzhen, Guangdong 518100 (CN); ZHANG, Xuegang, Shenzhen, Guangdong 518100 (CN); ZHOU, Can, Shenzhen, Guangdong 518100 (CN); XU, Xiaomei, Shenzhen, Guangdong 518100 (CN); JIANG, Hui, Shenzhen, Guangdong 518100 (CN); ZHANG, Jianbo, Shenzhen, Guangdong 518100 (CN); LUO, Xiao, Shenzhen, Guangdong 518100 (CN); CHEN, Zhihua, Shenzhen, Guangdong 518100 (CN); ZHENG, Dapeng, Shenzhen, Guangdong 518100 (CN); ZHOU, Yichao, Shenzhen, Guangdong 518100 (CN); MAO, Ting, Shenzhen, Guangdong 518100 (CN); MEI, Shibai, Shenzhen, Guangdong 518100 (CN); WANG, Yan, Shenzhen, Guangdong 518100 (CN); QIAO, Jianwang, Shenzhen, Guangdong 518100 (CN)
(74) Representative: Greaves Brewster LLP
(86) International application number: PCT/CN2023/103068
(87) International publication number: WO 2024/016967

(57) **Abstract**

The present invention provides a multiplexing method and system for a nuclear power plant control system, and the multiplexing method for a nuclear power plant control system includes the steps of: acquiring an operation condition of a unit via a life monitoring unit of the main control system, wherein the operation condition is determined by a non-safety level status and a safety level status of the main control system, as well as a non-safety level status and a safety level status of an auxiliary control system, a mode switching is performed between the auxiliary control system and the main control system via a multi-channel switching system, and the auxiliary control system multiplexes a display terminal of the main control system; starting monitoring status of the auxiliary control system, diverse human-machine interface panel, and expansion condition accident panel via the multi-channel switching system on the basis of the operating condition. The multiplexing method for a nuclear power plant control system of the present invention can simplify human-machine interface equipment in a control room, reduce project costs and complete monitoring and control of normal and accident conditions of a nuclear power plant, thereby effectively ensuring the safety and operation of the nuclear power plant.

## Description

### FIELD OF THE INVENTION

The present invention generally relates to nuclear power plant control room design and, more particularly, relates to a multiplexing method and system for a nuclear power plant control system.

### BACKGROUND OF THE INVENTION

Prior to the introduction of DCS (Digital Control System) instrument control technology, the main control room of a nuclear power plant relied on conventional hardware control panel to operate and control the power plant. The panels are equipped with a large number of light signal alarm devices, to remind the operators to carry out normal and accident operations. However, with the widespread adoption of DCS instrument control technology in nuclear power plants, the main control room primarily uses a digital human-machine interface. In the event of a failure in the main control system (MCS: Main Control System), the monitoring and control of the nuclear power plant are completed via an independent auxiliary backup control panel (ACS: Auxiliary Control System).

Conventional hardware control panels mostly use a large number of control buttons, indicator lights and light signal alarm devices, such as about 3000 hardware devices. The operation mode is generally one-to-one, i.e., one operation corresponds to one device. Due to the complex interaction relationship between devices, a large number of hardware device cables lead to a large number of DCS cabinets required. The human-machine interface is relatively decentralized, and the workload of the operator is quite heavy. In addition, the maintenance cost and maintenance in the later period is high, and the periodic test method is also complicated.

After the control room adopts a digital human-machine interface, the nuclear power plant generally uses a hardware backup panel to achieve normal and accident handling in the main control room. Hardware backup panels also mostly use a large number of control buttons, light indicator, and light signal alarm devices, etc. The number of panel devices is generally about 1500. The scale and volume of the hardware backup panel are also relatively large, and a large number of hard-wired devices and cables lead to a large number of DCS cabinets required, the interaction between devices is relatively complex, and the human-machine interface is relatively decentralized. The workload of the operator is also quite heavy.

### SUMMARY OF THE INVENTION

One object of the present invention is to overcome the disadvantages of the prior art and provides a multiplexing method and system for a nuclear power plant control system.

According to one embodiment of the present invention, a multiplexing method for a nuclear power plant control system includes the steps of:
acquiring an operation condition of a unit via a life monitoring unit of the main control system, wherein the operation condition is determined by a non-safety level status and a safety level status of the main control system, as well as a non-safety level status and a safety level status of an auxiliary control system, a mode switching is performed between the auxiliary control system and the main control system via a multi-channel switching system, and the auxiliary control system multiplexes a display terminal of the main control system; and
starting monitoring status of the auxiliary control system, diverse human-machine interface panel, and expansion condition accident panel via the multi-channel switching system, on the basis of the operation condition.

According to one aspect of the present invention, acquiring an operation condition of a unit via a life monitoring unit of the main control system includes:
determining the operation condition as design base condition when the non-safety level status of the main control system is failure, and the non-safety level status of the auxiliary control system is normal or failure; and
determining the operation condition as Design Extension Condition when the non-safety level status of the main control system is failure, and the main control system causes the safety level status to be failure via a common cause failure of a protection system.

According to one aspect of the present invention, the operation condition includes normal operation condition and design base condition, and the step of starting monitoring status of the auxiliary control system, diverse human-machine interface panel, and expansion condition accident panel via the multi-channel switching system on the basis of the operation condition includes:
monitoring the unit or performing accident handling via the auxiliary control system when the operation condition is normal operation condition or the design base condition, the non-safety level status of the main control system is failure, and the non-safety level status of the auxiliary control system is normal; and
performing accident handling on the unit via the safety level status of the main control system when the operation condition is design base condition, the non-safety level status of the main control system is failure, and non-safety level status of the auxiliary control system is failure.

According to one aspect of the present invention, the auxiliary control system is used to bring the unit to and keep the unit in a safety status when the operation condition is normal operation condition, the auxiliary control system monitors the unit, and parameters of the core fluctuate unstably.

According to one aspect of the present invention, the operation condition includes Design Extension Condition and serious accident condition, and the step of starting monitoring status of the auxiliary control system, diverse human-machine interface panel, and expansion condition accident panel via the multi-channel switching system on the basis of the operation condition includes:
monitoring the unit or performing accident handling via the diverse human-machine interface panel when the operation condition is Design Extension Condition; and
performing accident handling on the unit via the expansion condition accident panel when the operation condition is serious accident condition.

According to one aspect of the present invention, the step of a mode switching is performed between the auxiliary control system and the main control system via a multi-channel switching system, and the auxiliary control system multiplexes a display terminal of the main control system includes:
all control instructions on the display terminal of the main control system and test instructions on the auxiliary control system being locked, and the operator workstation exiting main control system operation mode when the main control system is switched to the auxiliary control system;
activating all control instructions on the auxiliary control system, and logging in the operator workstation in the auxiliary control system operation mode;
activating all control instructions on the display terminal of the main control system and logging in the operator workstation in the main control operation mode when the auxiliary control system being switched to the main control system; and
the control instructions and test instructions on the auxiliary control system being locked, the operator workstation exiting the auxiliary control system operation mode, and prohibiting forced login of the auxiliary control system operation mode.

According to one aspect of the present invention, the auxiliary control system multiplexing the display terminal of the main control system includes the operator workstation controls the display terminal to switch between the auxiliary control system and the main control system via a screen display switch.

According to one aspect of the present invention, the main control system includes a nuclear island operator workstation, a conventional island operator workstation, a captain workstation and a safety engineer workstation multiplexing the display terminal, wherein the display terminal is connected to the auxiliary control system and the main control system equipped with the life monitoring unit, and the step of a mode switching is performed between the auxiliary control system and the main control system via the multi-channel switching system includes:
when the main control system displays a loss of life signal through the life monitoring unit, the main control system is switched to the auxiliary control system through the multi-channel switching system, and the operation mode of the nuclear island operator workstation, the conventional island operator workstation, the captain workstation and the safety engineer workstation is switched to the auxiliary control system operation mode.

According to one aspect of the present invention, the nuclear power plant control system further includes a large screen display multiplexed by the main control system and the auxiliary control system, the large screen display is used for displaying main parameters of the nuclear power plant, status of the main equipments and status of the safety protection system, wherein the main control system includes at least one operator workstation, and all the operator workstations realize control of the large screen display through multi-channel multiplexing.

According to another embodiment of the present invention, a nuclear power plant control system includes a main control system and an auxiliary control system, and the main control system and auxiliary control system implement the multiplexing method for a nuclear power plant control system of the present invention.

According to another embodiment of the present invention, a computer readable storage medium storing a computer program is provided. The computer program is executed by the processor to implement the multiplexing method for a nuclear power plant control system of the present invention.

Compared with the prior art, the multiplexing method and system for a nuclear power plant control system of the present invention adopts a display terminal device multiplexing scheme of the main control system and the auxiliary control system with low fault rates, the signal processing and network units of the main control system and the auxiliary control system respectively adopt different systems that satisfy independence and diversity. When the main control system loses the life signal, the main control system can be switched to the auxiliary control system through a multi-channel switching system. The auxiliary control system can multiplex the display terminal device of the main control system, and re-connect with the independent diverse signal processing and network units to realize the monitoring and control of the nuclear power plant, to achieve the purpose of canceling the real auxiliary standby monitoring disk platform, to simplify the human-machine interface equipment of the control room and improve the efficiency of the operator under the premise of unchanged functions and reduce the project cost. The multiplexing method and system for a nuclear power plant control system of the present invention can monitor and control the normal and accident condition of the nuclear power plant even in the event of failure of the primary digital main control system.

### BRIEF DESCRIPTION OF THE DRAWINGS

In order to explain the technical solution of the embodiments of the present invention clearly, a brief introduction to the drawings required in the embodiments will be described as following. It should be understood that the drawings show only some embodiments of the present invention and, therefore, should not be seen as a limitation to the scope of the present invention. To one ordinary skilled in the art, other relevant drawings can also be obtained without creative work on the basis of the drawings.
Fig. 1 depicts a flowchart of a multiplexing method for a nuclear power plant control system according to one embodiment of the present invention;
Fig. 2 depicts a first flowchart of a multiplexing method for a nuclear power plant control system according to another embodiment of the present invention;
Fig. 3 depicts a second flowchart of a multiplexing method for a nuclear power plant control system according to another embodiment of the present invention;
Fig. 4 depicts a third flowchart of a multiplexing method for a nuclear power plant control system according to another embodiment of the present invention;
Fig. 5 is a principle operation diagram of a main control room in a reduced mode in the multiplexing method for a nuclear power plant control system according to another embodiment of the present invention;
Fig. 6 depicts a fourth flowchart of a multiplexing method for a nuclear power plant control system according to another embodiment of the present invention;
Fig. 7 depicts a schematic diagram of a single OWP screen multi-channel multiplexing scheme in a multiplexing method for a nuclear power plant control system according to another embodiment of the present invention;
Fig. 8 depicts a schematic diagram of a large screen multi-channel multiplexing scheme in a multiplexing method for a nuclear power plant control system according to another embodiment of the present invention;
Fig. 9 depicts another schematic diagram of a single OWP screen multi-channel multiplexing scheme in a multiplexing method for a nuclear power plant control system according to another embodiment of the present invention;
Fig. 10 depicts another schematic diagram of a large screen multi-channel multiplexing scheme in a multiplexing method for a nuclear power plant control system according to another embodiment of the present invention; and
Fig. 11 depicts a schematic diagram of an implementation example of a switching switch between a main control system and an auxiliary control system in the multiplexing method for a nuclear power plant control system according to another embodiment of the present invention.

### DETAILED DESCRIPTION OF THE INVENTION

The technical solution of the embodiments of the present invention will be described clearly and completely in combination with the drawings. Obviously, the embodiments described are only a part of the embodiments of the present invention, not all embodiments. Therefore, the following detailed description of embodiments of the present invention provided in the attached drawings is not intended to limit the scope of the present invention, but merely represents selected embodiments of the present invention. Based on the embodiments of the present invention, other embodiments obtained by one ordinary skilled in the art without creative work also fall within the scope of the present invention.

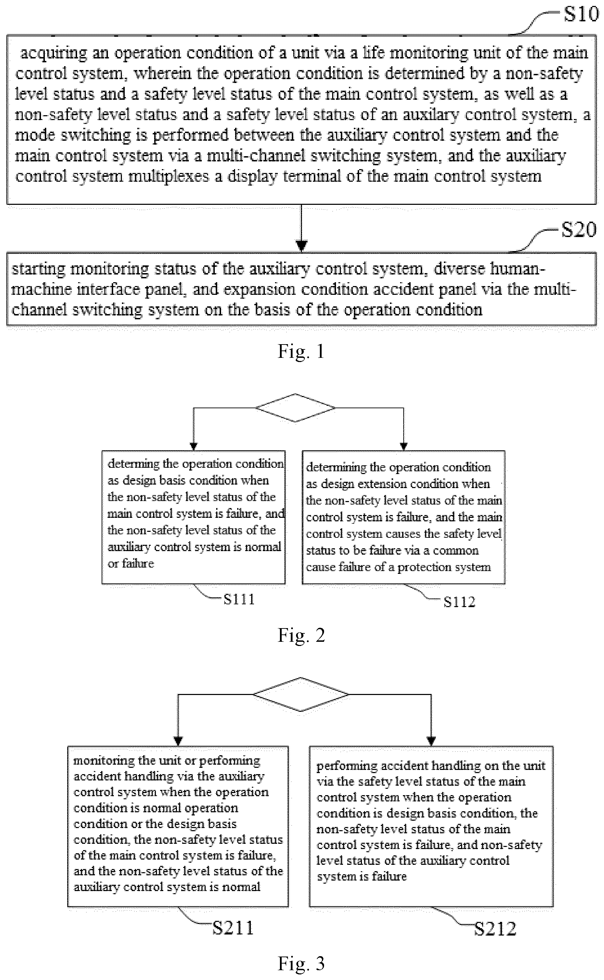

According to one embodiment of the present invention, as shown in Fig. 1, a multiplexing method for a nuclear power plant control system is provided in view of the server shown in Fig. 1. The multiplexing method for a nuclear power plant control system includes the steps of:
S10. acquiring an operation condition of a unit via a life monitoring unit of the main control system, wherein the operation condition is determined by a non-safety level status and a safety level status of the main control system, as well as a non-safety level status and a safety level status of an auxiliary control system, a mode switching is performed between the auxiliary control system and the main control system via a multi-channel switching system, and the auxiliary control system multiplexes a display terminal of the main control system.

Specifically, the life monitoring unit is the unit that obtains the life condition report after analyzing each parameter of the nuclear power plant unit during operation.

The digital control system (DCS) of nuclear power plant, referred to as the "nerve center" in nuclear power plant operation, includes safety level DCS and non-safety level DCS. It controls the operation of hundreds of systems and nearly ten thousand devices in nuclear power plants and various working conditions through the main control room (MCR). The safety level DCS can achieve safe shutdown of the reactor under accident conditions, ensuring the safe operation of the nuclear power plant; the non-safety level DCS is responsible for operation and management, and is an important guarantee for the efficient economy of the nuclear power plant. Nuclear power plants generally achieve safety monitoring and control of nuclear power plants via the main control system, and enter the monitoring and control state of the auxiliary control system in case of abnormal conditions.

S20. starting monitoring status of the auxiliary control system, diverse human-machine interface panel, and expansion condition accident panel via the multi-channel switching system on the basis of the operation condition.

Specifically, the diverse human-machine interface panel (DHP) is an artificial control platform that integrates a diversity of designs, high degree of integration, and human-machine interaction editing. The DEC control panel (DCP) is a platform for controlling serious accidents.

The multiplexing method and system for a nuclear power plant control system of the present invention adopts a display terminal device multiplexing scheme of the main control system and the auxiliary control system with low fault rates, the signal processing and network units of the main control system and the auxiliary control system respectively adopt different systems that satisfy independence and diversity. When the main control system loses the life signal, the main control system can be switched to the auxiliary control system through a multi-channel switching system. The auxiliary control system can multiplex the display terminal device of the main control system, and re-connect with the independent diverse signal processing and network units to realize the monitoring and control of the nuclear power plant, to achieve the purpose of canceling the real auxiliary standby monitoring disk platform, to simplify the human-machine interface equipment of the control room and improve the efficiency of the operator under the premise of unchanged functions and reduce the project cost. The multiplexing method and system for a nuclear power plant control system of the present invention can monitor and control the normal and accident condition of the nuclear power plant even in the event of failure of the primary digital main control system, and form a safety automation system (SAS).

In one embodiment of the present invention, as shown in Fig. 2, the step of acquiring an operation condition of a unit via a life monitoring unit of the main control system includes:
S111. determining the operation condition as design basis condition when the non-safety level status of the main control system is failure, and the non-safety level status of the auxiliary control system is normal or failure.
S112. determining the operation condition as Design Extension Condition when the non-safety level status of the main control system is failure, and the main control system causes the safety level status to be failure via a common cause failure of a protection system.

Specifically, DBC, design basis condition, is operation condition for the auxiliary control system. DEC, design extension condition, is condition indicating the start of the safety level status in the main control system.

**In** one embodiment of the present invention, as shown in Fig. 3, the operation condition includes normal operation condition and design base condition.
the step of starting monitoring status of the auxiliary control system, diverse human-machine interface panel, and expansion condition accident panel via the multi-channel switching system on the basis of the operation condition includes:
S211. monitoring the unit or performing accident handling via the auxiliary control system when the operation condition is normal operation condition or the design base condition, the non-safety level status of the main control system is failure, and the non-safety level status of the auxiliary control system is normal; and
S212. carrying out accident handling for the unit via the safety level status of the main control system when the operation condition is design base condition, the non-safety level status of the main control system is failure and the non-safety level status of the auxiliary control system is failure.

Specifically, in order to solve the problem of how to operate during the descent mode of the main control room, the descent mode operation principle is proposed as following:
During the normal operation condition of the unit, in case of failure of the non-safety level MCS: the non-safety level ACS shall be used to monitor and maintain the unit in steady power operation, and the unit shall be brought to and maintained in a safe state immediately using the ACS once the core parameters unstable or there are large fluctuations in core power;
The unit is in the design base condition and a failure of MCS non-safety level occurs: whether a failure of MCS non-safety level during the accident condition or a design bases accident occurs during the operation of ACS non-safety level (i.e. MCS non-safety level has already failed, the corresponding accident procedures shall be monitored on ACS or the relevant accident-follow-up safety functions shall be performed to bring the unit to and maintain in a safe state.

**In** one embodiment of the present invention, when the operation condition is normal operation and the auxiliary control system monitors the unit, and parameters of the core fluctuate unstably, the auxiliary control system is used to bring the unit to and keep the unit in a safety status.

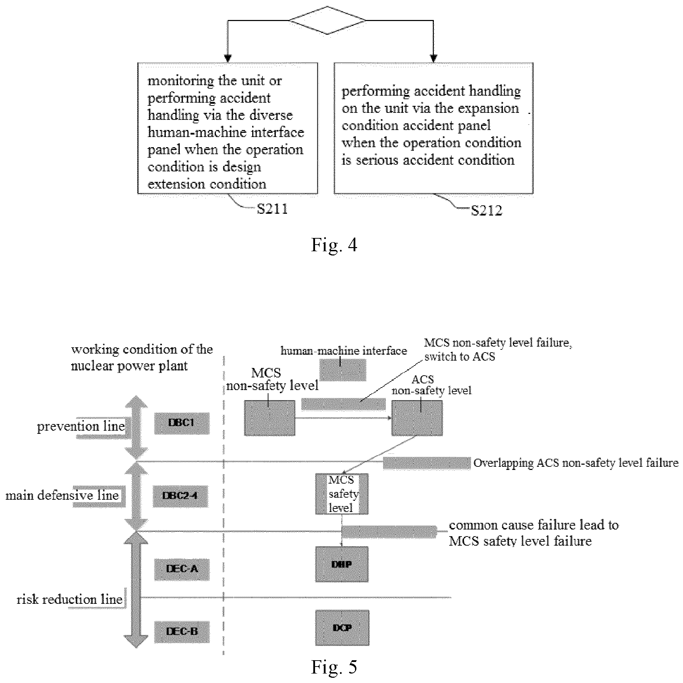

**In** one embodiment of the present invention, as shown in Figs. 4 and 5, the operation condition includes design extension condition and serious accident condition.

The step of starting monitoring status of the auxiliary control system, diverse human-machine interface panel, and expansion condition accident panel via the multi-channel switching system on the basis of the operation condition includes:
S211 monitoring the unit or performing accident handling via the diverse human-machine interface panel when the operation condition is design extension condition; and
S222. performing accident handling on the unit via the expansion condition accident panel when the operation condition is serious accident condition.

Specifically, when the non-safety level of MCS and ACS are all failure, the accident handling is implemented by using the safety level of MCS to make the unit reach and maintain the safety state. When the common cause failure of the protection system RPS (Reactor Protection System) leads to the failure of MCS safety level, the monitoring and control of the unit is transferred to the diversified human-machine interface panel (DHP). When a severe accident occurs, the function of prevention and mitigation of the severe accident is realized via the extended condition accident panel (DCP).

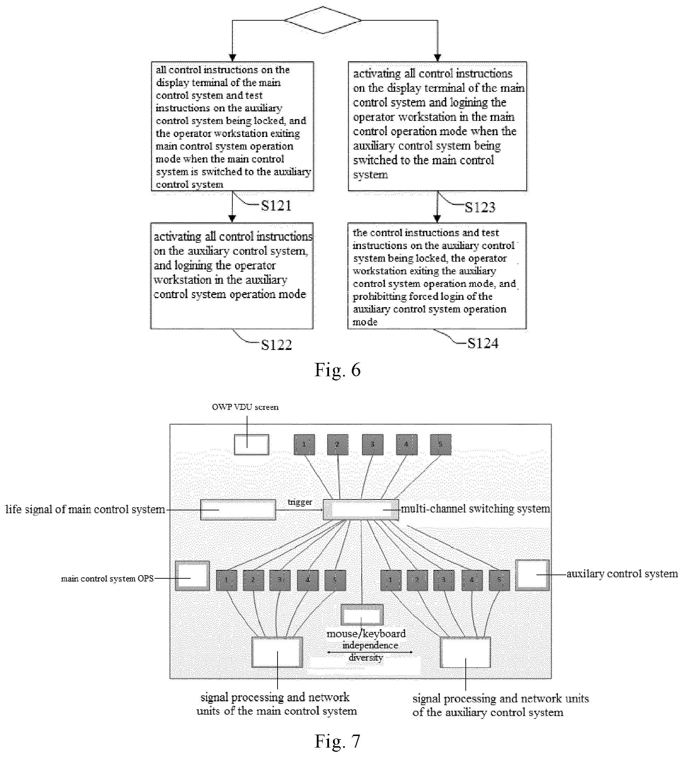

**In** one embodiment of the present invention, as shown in Fig. 6, the step of a mode switching is performed between the auxiliary control system and the main control system via a multi-channel switching system includes:
S121. all control instructions on the display terminal of the main control system and test instructions on the auxiliary control system being locked, and the operator workstation exiting main control system operation mode when the main control system is switched to the auxiliary control system.
S122. activating all control instructions on the auxiliary control system, and logging in the operator workstation in the auxiliary control system operation mode.
S123. activating all control instructions on the display terminal of the main control system and logging in the operator workstation in the main control operation mode when the auxiliary control system being switched to the main control system.
S124. activating all control instructions on the display terminal of the main control system and logging in the operator workstation in the main control operation mode when the auxiliary control system being switched to the main control system.

Specifically, to solve the problem of how to switch between each operation mode of the control room and how to set the human-machine interface monitoring authority after switching, the present invention proposes the switching principle of each operation mode of the control room as following.

### 1) The operation mode principle of switching from MCS to ACS

By default, in MCR operation mode, when the power plant control mode is switched from MCS to ACS operation mode, the related human-machine interface monitoring authority is as follows:
a) MCS all columns control instructions (VDU, visual display unit, display device multiplexing) and ACS test instructions (excluding lamp test) are locked, OWP automatically exits the MCS operation mode, and cannot be forced to log in to the MCS operation mode, and the alarm flashing and sound functions of MCS are prohibited;
b) All ACS control instructions (VDU, hardware) are effective, and the VDU of OWP logs in automatically in ACS operation mode, and the alarm flashing and sound functions of ACS are effective;
c) The control instructions of each column in the safety level section on the OWP are effective;
d) ECP each column control instructions are effective.
e) DHP control instructions (VDU and hardware), alarm flashing and sound functions are not affected (effectiveness is determined by the DHP activation);
f) DCP each column control instructions (VDU and hardware), alarm flashing and sound functions are not affected (effectiveness is determined by the DCP activation mode).

### 2) The operation mode principle of switching from ACS to MCS

In MCR operation mode by default, when the plant control method is switched from ACS to MCS operation mode, the related human-machine interface monitoring authority is as follows:
a) All MCS column control instructions (VDU) are effective and the operator can log in to MCS operation mode on OWP, and the alarm flashing and sound functions of MCS are effective;
b) All ACS column control and test instructions (VDU, hardware) are locked (except for control devices that are not affected by the MCS/ACS switch), the VDU of OWP automatically exits the ACS operation mode, and it is impossible to force a login to the ACS operation mode; the alarm flashing and sound functions of ACS are prohibited (except for MCS life monitoring alarms and RSS operation mode alarms, because the flashing and sound functions are not affected by the MCS/ACS switch), and alarms are indicated in the form of light;
c) All column control instructions of the safety level part on OWP are effective;
d) All column control instructions of ECP emergency control panel) are valid;
e) DHP control instructions (VDU and hardware), alarm flashing and sound functions are not affected (the validity is determined by the DHP activation mode);
f) All column control instructions of DCP (VDU and hardware), alarm flashing and sound functions are not affected (the validity is determined by the DCP activation mode).

### 3) The test mode principle of switching to ACS

When the plant control mode is switched to ACS test mode under the default MCR operation mode, the related human-machine interface monitoring authorities are as follows:
a) The control instructions of each ACS column (VDU, hardware) are all closed (except for control devices that are not affected by the MCS/ACS switch), and the ACS-related periodic tests can be performed, the alarm flashing and sound functions of ACS are effective, and the VDU of OWP cannot be forcibly logged into the ACS operation mode;
b) The control instructions of each MCS column (VD) are valid, and the alarm flashing and sound functions of MCS are valid;
c) The control instructions of each column of the safety level part on OWP are valid;
d) The control instructions of each ECP column are valid;
e) The DHP control instructions (VDU and hardware), alarm flashing and sound functions are not affected (validity is determined by the DHP activation mode);
f) The DCP control instructions of each column (VDU and hardware), alarm flashing and sound functions are not affected (validity is determined by the DCP activation mode).

In one embodiment of the present invention, display terminal of the auxiliary control system multiplexing the main control system includes the operator workstation controlling the display terminal to switch between the auxiliary control system and the main control system via a screen display switch.

Specifically, in order to solve the problem that the main control system and the auxiliary control system only switch the screen display without affecting the operation mode of the main control system and the auxiliary control system, the present invention proposes the following principle of switching the screen display of the main control system and the auxiliary control system:
Each OWP panel is equipped with one MCS/ACS screen display switch, each switch has two positions: "MCS" and "ACS" which can be selected, through which the overall five screen display inputs of the OWP can be switched between the MCS and ACS platforms.

When the MCS/ACS screen display switch fails, it is assumed that the switch sends "MCS" position signal. When one screen display fails, only the display switch of the OWP cannot switch the display, the other three OWPs are not affected.

Since the MCS/ACS screen display switch only switches the display content of the OWP screen and does not switch the operation mode, after switching, the operation of all human-machine interfaces in the main control room will not change.

In one embodiment of the present invention, the main control system includes a nuclear island operator workstation, a conventional island operator workstation, a captain workstation and a safety engineer workstation multiplexing the display terminal, wherein the display terminal is connected to the auxiliary control system and the main control system equipped with the life monitoring unit.
the step of a mode switching is performed between the auxiliary control system and the main control system via the multi-channel switching system includes: when the main control system displays a loss of life signal through the life monitoring unit, the main control system is switched to the auxiliary control system through the multi-channel switching system, and the operation mode of the nuclear island operator workstation, the conventional island operator workstation, the captain workstation and the safety engineer workstation is switched to the auxiliary control system operation mode.

Specifically, in order to solve the problem of how to multiplex the multiple channels between the main control system and the auxiliary control system screen, so as to optimize the human-machine device, and achieve the purpose of reducing the repetition of human-machine interface functions the following principles and solutions for multiplexing the multiple channel technology between the main control system and the auxiliary control system screen are proposed.

The main control room central operation area is equipped with four redundant main control system operator workstations OWP (Operator Working Place), i.e., nuclear island operator workstation NI-OWP, conventional island operator workstation CI-OWP, captain workstation US-OWP, and safety engineer workstation SE-OWP. The VDU of the four OWP workstations are connected to the mainframe of the main control system and the auxiliary control system respectively, and the life monitoring unit is set up in the main control system. When the main control system loses the life signal, the main control system can be switched to the auxiliary control system through the multi-channel switching system, and the four main control system operator workstations are switched to the auxiliary control system mode, and the nuclear power plant is monitored and controlled by using independent and diverse signal processing and network units.

In one embodiment of the present invention, the nuclear power plant control system further includes a large screen display multiplexed by the main control system and the auxiliary control system. The large screen display is used to display the main parameters of the nuclear power plant, the status of the main equipment and the status of the safety protection system. The main control system includes at least one operator workstation.

In one embodiment of the present invention, the nuclear power plant control system further includes a large screen display multiplexed by the main control system and the auxiliary control system. The large screen display is used to display the main parameters of the nuclear power plant, the status of the main equipment and the status of the safety protection system. The main control system includes at least one operator workstation

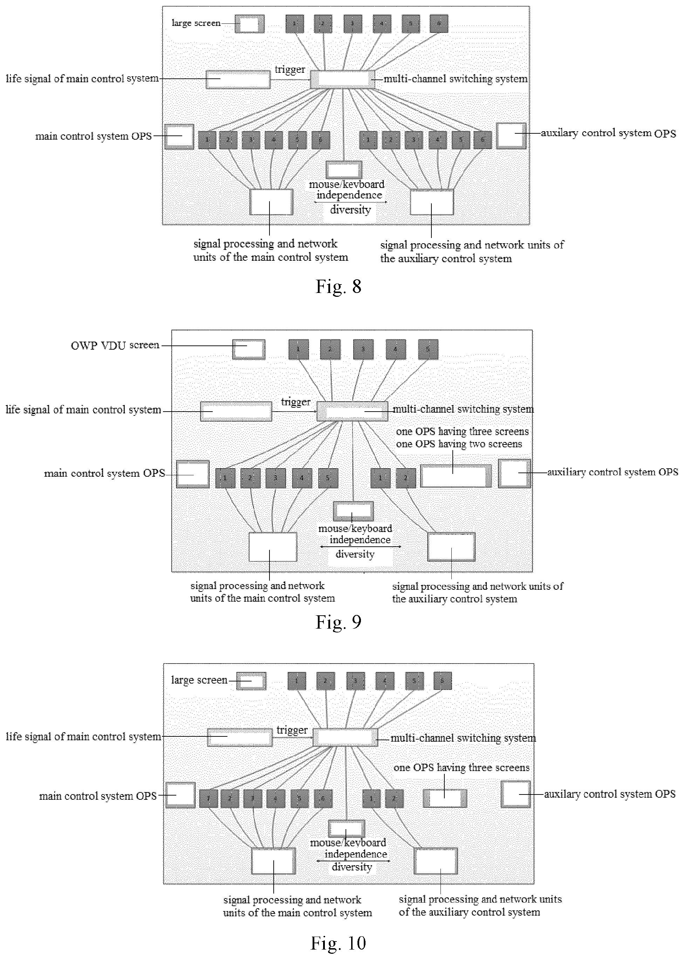

Specifically, the large screen display (LDP) is multiplexed by the main control system and auxiliary control system, and is used to display the main parameters of the power plant, the status of main equipment, and the status of the safety protection system, to provide an overall view of the power plant for operators and personnel entering the main control room during normal or accident conditions of the power plant.
1) The multi-channel multiplexing technical solution 1 of OWP and LDP "operation terminal one-to-one multiplexing technology" is:
   1) All adopt a solution in which one host (OPS) corresponds to one screen (VDU), i.e., OWP adopts a solution in which five control systems OPS switch five auxiliary control systems OPS, and LDP adopts a solution in which six main control systems large screen OPS switch six auxiliary control systems screen OPS, and the multi-channel switching system will have the functions of multi-channel display and control switching at the same time.
   2) The display signal switching between main control system and the auxiliary control system is realized by setting a separate hardware switching switch. The switching diagram is shown in Fig. 7 and Fig. 8.
      The multi-channel multiplexing technical solution 2 of OWP and LDP "Operation terminal one-to-many multiplexing technology" is:
   3) Adopt a solution of one host (OPS) corresponding to multiple screens (VDU), namely, the OWP adopts a solution of five main control system OPS switching two auxiliary control system OPS, and the LDP adopts a solution of six main control system large screen OPS switching two auxiliary system large screen OPS, and the multi-channel switching system will have the functions of host remote arrangement and video matrix switching at the same time.
   4) The display signal switching between the main control system and the auxiliary control system is realized by setting a separate hardware switching switch. The switching diagram is shown in Fig. 9 and Fig. 1. Furthermore, the present application also provides an implementation method for a switching switch between a main monitoring system and an auxiliary monitoring system operation mode.

The present invention also provides a method for implementing a switch for switching the operation mode between the main control system and the auxiliary control system.

In order to solve the problem of how to set the switching switch of the operation mode between the main control system and the auxiliary control system, the present invention provides the following method:
In order to switch the control right of the main control system and auxiliary control system on the OWP non-safety part, and avoid issuing instructions, an overall mode switching switch of MCS/ACS is provided. The safety level part on the OWP is multiplexed by MCS/ACS, so MCS/ACS mode switch is not carried out, or it is not affected by the MCS/ACS mode switch;
Three MCS/ACS mode switching switches in total are provided, each switch has two positions: "MCS" and "ACS" can be selected, and the number of switching switches in the "ACS" position determines the operation mode;
The switch signal of each switching switch should be sent to the A/B column of the DCS and the DCS cabinet of the four protection channels for switching interlocking logic respectively, to ensure that all cabinets affected by the MCS/ACS switch receive the switch status information, and execute the corresponding switch intering function.

In order to solve the problem of how to set the switching switch of the main control system and the auxiliary control system screen display, the present invention further provides the following method:
In order to carry out regular tests and parameter comparison of MCS/ACS, a switch for screen display switching between MCS/ACS is set and a switch for screen display switching between MCS/ACS is set on each OWP platform;
Four screen display switching switches for MCS/ACS are set in total (one for each OWP platform), each switching switch has two positions: "MCS" and "ACS" can be selected, and the screen display of the OWP can be switched between the MCS and ACS platforms through the switch (the control authority is not affected by the screen display switching switch);
The failure of the screen display switching switch on any one OWP does not affect the switching of other OWP screens, which meets the redundancy requirements.

Method for implementing the main control system and auxiliary control system mode switching: among the three MCS/ACS mode switching switches, the number of switches in the "ACS" position determines the operating mode:
0/3: All switching switches in the "MCS" position, operating mode is MCS operating mode;
1/3: Only one switching switch in the "ACS" position, the other two switching switches still in the "MCS" position, ACS will be in test mode;
2/3 or 3/3: Two or three switching switches in the "ACS" position, operating mode is ACS operating mode.

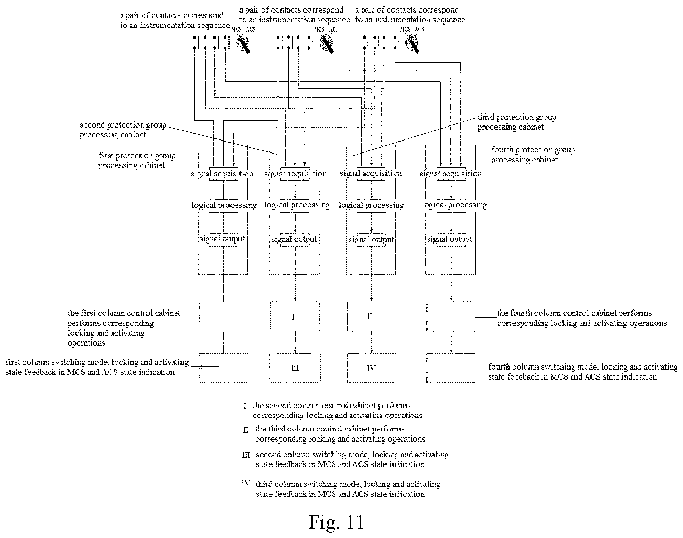

1) Equipment configuration, MCS/ACS mode switching equipment is shown in Fig. 11:
   Switching switch module: used to issue switching instructions, meet the single fault criterion, have testable conditions, and consider dealing with the risk of tripping, refusal to operate, and operational convenience; □
   Signal acquisition module of switching processing cabinet: used to receive the status signal of the switching switch and allocate it to the logic processing module;
   Logic processing module: used to logically process the combination of switching switch instructions, and judge the working mode of ACS; □
   Signal outputting module: used to send the logic processing result (i.e., the working mode of ACS) to the corresponding control cabinet; □
   Instruction activating lockout module, used to activate or lock the operation authorities of ACS related operating equipment (including conventional hardware equipment and digital equipment) according to the working mode of ACS; □
   Output displaying module: used to feed back the working status of MCS and ACS, and the activation/lockout state of the control equipment operation authorities to MCS and ACS for further instructions.
2) The switching method, the switching method is implemented according to the following steps:
   Issuing switching instructions via operating the switching switch;
   The signal acquisition module of switching processing cabinet receiving the switching instructions;
   Signal acquisition module sending the switching instruction to the logic processing module;
   The logic processing module processing logical operations to determin the working mode of the ACS and transmit the results of operation;
   The results of the operation are sent to the corresponding control cabinet through the signal outputting module; □
   The control cabinet activating or locking the device operation authorities on the ACS according to the working mode of the ACS;
   Feeding the working status of ACS, the activation and locking status of the control device operation authorities back to the MCS and ACS, for further instructions.

When the MCS/ACS mode switching switch fails, the DCS cabinet defaults to receive the "MCS" instruction signal issued by the switching switch. Therefore, when one switch fails, the existing operation mode corresponding to the MCS/ACS mode switch is not affected. For example, if one of the three switches fails and the other two are in "MCS", the MCS operation is still valid and is not affected (in the ACS test mode at this time); if the other two are set to "ACS", it is in the ACS operation mode.

Compared with the prior art, the multiplexing method and system for a nuclear power plant control system of the present invention adopts a display terminal device multiplexing scheme of the main control system and the auxiliary control system with low fault rates, the signal processing and network units of the main control system and the auxiliary control system respectively adopt different systems that satisfy independence and diversity. When the main control system loses the life signal, the main control system can be switched to the auxiliary control system through a multi-channel switching system. The auxiliary control system can multiplex the display terminal device of the main control system, and re-connect with the independent diverse signal processing and network units to realize the monitoring and control of the nuclear power plant, to achieve the purpose of canceling the real auxiliary standby monitoring disk platform, to simplify the human-machine interface equipment of the control room and improve the efficiency of the operator under the premise of unchanged functions and reduce the project cost.

The present invention can effectively solve the problem of guiding operators to complete the monitoring and control of normal and accident conditions of nuclear power plants through the multiplexing method of the digital main control system and the auxiliary control system in the case of failure of the main digital main control system, thereby effectively ensuring the safety and operation of nuclear power plants.

The main technical problems to be solved by the above solutions are detailed as following: the problem of how to operate the main control room in drop mode; principle problem of switching from MCS to ACS operation mode; the principle problem of switching from ACS to MCS operation mode; the principle problem of switching to ACS test; the principle problem of switching between the displays of the main control system and the auxiliary control system; Main control system and auxiliary control system screen multi-channel multiplexing solution: multi-channel solution 1 for how to multiplex a single OWP screen; main control system and auxiliary control system screen multi-channel multiplexing solution: a multi-channel solution 1 for how to multiplex a large screen; Main control system and auxiliary control system screen multi-channel multiplexing solution: a multi-channel solution 2 for how to multiplex a single OWP screen; Main control system and auxiliary control system screen multi-channel multiplexing solution: a multi-channel solution for how to multiplex a large screen; How to set the switch of the main control system the auxiliary control system operation mode; How to set the switch of the display of the main control system and the auxiliary control system screen, and how to implement the mode switching of the main control system and the auxiliary control system.

In addition, the present application can effectively solve the problems that the scale and volume of the conventional hardware backup panel in the main control room are relatively large, and a large number of hard wiring equipment and cables are required, resulting in a large number of DCS cabinets being required. The present invention can effectively solve the problems that the human-machine interface between the original conventional hardware backup panel and the main control system is relatively scattered, the workload of the operator during the system switching process is quite heavy, the maintenance and repair cost of the original conventional hardware backup panel in the later period is relatively high, and the periodic test method is also cumbersome. The present invention can also effectively solve the problem that in the case of failure the main control system, the monitoring method of multiplexing the screen of the main control system is used to complete the accident handling through the auxiliary control system proposed, without the need of setting up a separate physical auxiliary backup monitoring system monitoring panel, to achieve the purpose of simplifying the human-machine interface equipment in the control room, improving the efficiency of operators, saving project costs to the maximum extent under the premise of unchanged functions, while ensuring the safe and effective power generation and economy of nuclear power plants.

It should be understood that the numerical order of the steps in the embodiments of the present invention does not necessarily mean the order in which they are to be performed, the execution of each process should be determined according to its function and internal logic, and should not constitute any limitation on the implementation process of the present invention.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. A multiplexing method for a nuclear power plant control system, the nuclear power plant control system comprises a main control system and an auxiliary control system, **characterized in that**, the multiplexing method for a nuclear power plant control system comprises the steps of:
(S10) acquiring an operation condition of a unit via a life monitoring unit of the main control system, wherein the operation condition is determined by a non-safety level status and a safety level status of the main control system, as well as a non-safety level status and a safety level status of an auxiliary control system, a mode switching is performed between the auxiliary control system and the main control system via a multi-channel switching system, and the auxiliary control system multiplexes a display terminal of the main control system; and
(S20) starting monitoring status of the auxiliary control system, diverse human-machine interface panel, and expansion condition accident panel via the multi-channel switching system on the basis of the operation condition.

2. The multiplexing method for a nuclear power plant control system of claim 1, **characterized in that**, the step of acquiring an operation condition of a unit via a life monitoring unit of the main control system comprising:
**(S111)** determining the operation condition as design base condition when the non-safety level status of the main control system is failure, and the non-safety level status of the auxiliary control system is normal or failure; and
(S112) determining the operation condition as Design Extension Condition when the non-safety level status of the main control system is failure, and the main control system causes the safety level status to be failure via a common cause failure of a protection system.

3. The multiplexing method for a nuclear power plant control system of claim **1, characterized in that**, the operation condition comprises normal operation condition and design base condition, and the step of starting monitoring status of the auxiliary control system, diverse human-machine interface panel, and expansion condition accident panel via the multi-channel switching system on the basis of the operation condition comprises:
(S211) monitoring the unit or performing accident handling via the auxiliary control system when the operation condition is normal operation condition or the design base condition, the non-safety level status of the main control system is failure, and the non-safety level status of the auxiliary control system is normal; and
(S212) carrying out accident handling for the unit via the safety level status of the main control system when the operation condition is design base condition, the non-safety level status of the main control system is failure and the non-safety level status of the auxiliary control system is failure.

4. The multiplexing method for a nuclear power plant control system of claim 3, **characterized in that**, the auxiliary control system is used to bring the unit to and keep the unit in a safety status when the operation condition is normal operation condition, the auxiliary control system monitors the unit, and parameters of the core fluctuate unstably.

5. The multiplexing method for a nuclear power plant control system of claim **1, characterized in that**, the operation condition comprises design extension condition and serious accident condition, and the step of starting monitoring status of the auxiliary control system, diverse human-machine interface panel, and expansion condition accident panel via the multi-channel switching system on the basis of the operation condition comprises:
(S211) monitoring the unit or performing accident handling via the diverse human-machine interface panel when the operation condition is Design Extension Condition; and
(S212) performing accident handling on the unit via the expansion condition accident panel when the operation condition is serious accident condition.

6. The multiplexing method for a nuclear power plant control system of claim 1, **characterized in that**, the step of a mode switching is performed between the auxiliary control system and the main control system via a multi-channel switching system, and the auxiliary control system multiplexes a display terminal of the main control system comprises:
(S121) all control instructions on the display terminal of the main control system and test instructions on the auxiliary control system being locked, and the operator workstation exiting main control system operation mode when the main control system is switched to the auxiliary control system;
(S122) activating all control instructions on the auxiliary control system, and logging in the operator workstation in the auxiliary control system operation mode;
(S123) activating all control instructions on the display terminal of the main control system and logging in the operator workstation in the main control operation mode when the auxiliary control system being switched to the main control system; and
(S124) the control instructions and test instructions on the auxiliary control system being locked, the operator workstation exiting the auxiliary control system operation mode, and prohibiting forced login of the auxiliary control system operation mode.

7. The multiplexing method for a nuclear power plant control system of claim 1, **characterized in that**, the auxiliary control system multiplexing the display terminal of the main control system comprises the operator workstation controls the display terminal to switch between the auxiliary control system and the main control system via a screen display switch.

8. The multiplexing method for a nuclear power plant control system of claim **1, characterized in that**, the main control system comprises a nuclear island operator workstation, a conventional island operator workstation, a captain workstation and a safety engineer workstation multiplexing the display terminal, wherein the display terminal is connected to the auxiliary control system and the main control system equipped with the life monitoring unit, and the step of a mode switching is performed between the auxiliary control system and the main control system via the multi-channel switching system comprises:
when the main control system displays a loss of life signal through the life monitoring unit, the main control system is switched to the auxiliary control system through the multi-channel switching system, and the operation mode of the nuclear island operator workstation, the conventional island operator workstation, the captain workstation and the safety engineer workstation is switched to the auxiliary control system operation mode.

9. The multiplexing method for a nuclear power plant control system of claim **1, characterized in that**, the nuclear power plant control system further comprises a large screen display multiplexed by the main control system and the auxiliary control system, the large screen display is used for displaying main parameters of the nuclear power plant, status of the main equipments and status of the safety protection system, wherein the main control system comprises at least one operator workstation, and all the operator workstations realize control of the large screen display through multi-channel multiplexing.

10. A nuclear power plant control system comprising a main control system and an auxiliary control system, **characterized in that** the main control system and auxiliary control system implement the multiplexing method for a nuclear power plant control system as claimed in anyone of claims 1 to 9.
